# EUROPÄISCHE PATENTSCHRIFT

(11) **EP 0 929 985 B1**
(45) Veröffentlichungstag und Bekanntmachung des Hinweises auf die Patenterteilung: **15.03.2006**
(21) Anmeldenummer: 97943773.8
(22) Anmeldetag: 12.09.1997
(51) Int. Cl.: H04Q 7/38, H04B 7/26

(54) **BASISSTATION MIT SCHNELLER KANALWECHSELFUNKTION EINES ZELLULAREN TDMA/FDMA-FUNKSYSTEMS, INSBESONDERE EINES ZELLULAREN DECT-SYSTEMS**
BASE STATION WITH RAPID HANDOVER FUNCTION OF A CELLULAR TDMA/FDMA MOBILE RADIO SYSTEM, PARTICULARLY OF A CELLULAR DECT SYSTEM
STATION DE BASE A FONCTION DE TRANSFERT RAPIDE D'UN SYSTEME RADIO AMRT/AMRF CELLULAIRE, EN PARTICULIER D'UN SYSTEME DECT CELLULAIRE

(30) Priorität: 30.09.1996 DE 19640450
(43) Veröffentlichungstag der Anmeldung: 21.07.1999
(73) Patentinhaber: SIEMENS AKTIENGESELLSCHAFT, 80333 München (DE)
(72) Erfinder: BIEDERMANN, Rolf, D-48683 Ahaus (DE); BAUMEISTER, Josef, D-46325 Borken (DE)
(86) Internationale Anmeldenummer: PCT/DE1997/002060
(87) Internationale Veröffentlichungsnummer: WO 1998/015148

(56) Entgegenhaltungen:
- EP-A- 0 577 322
- WO-A-94/10811
- WO-A-94/13113
- MCCANN S ET AL: "DIGITAL EUROPEAN CORDLESS TELECOMMUNICATIONS SYSTEM BLIND SPOT ALGORITHM EVALUATION RESULTS" COMMUNICATIONS: CONNECTING THE FUTURE, SAN DIEGO, DEC. 2 - 5, 1990, Bd. 2 OF 3, 2.Dezember 1990, INSTITUTE OF ELECTRICAL AND ELECTRONICS ENGINEERS, Seiten 1023-1027, XP000220987
- PILGER U: "STRUKTUR DES DECT-STANDARDS" NACHRICHTENTECHNIK ELEKTRONIK, Bd. 42, Nr. 1, Januar 1992, Seiten 23-29, XP002016869 in der Anmeldung erwähnt

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (Frequency Division Multiple Access), TDMA (Time Division Multiple Access) und/oder CDMA (Code Division Multiple Access) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf eine Basisstation mit schneller Kanalwechselfunktion eines zellularen TDMA/FDMA-Funksystems, insbesondere eines zellularen DECT-Systems.

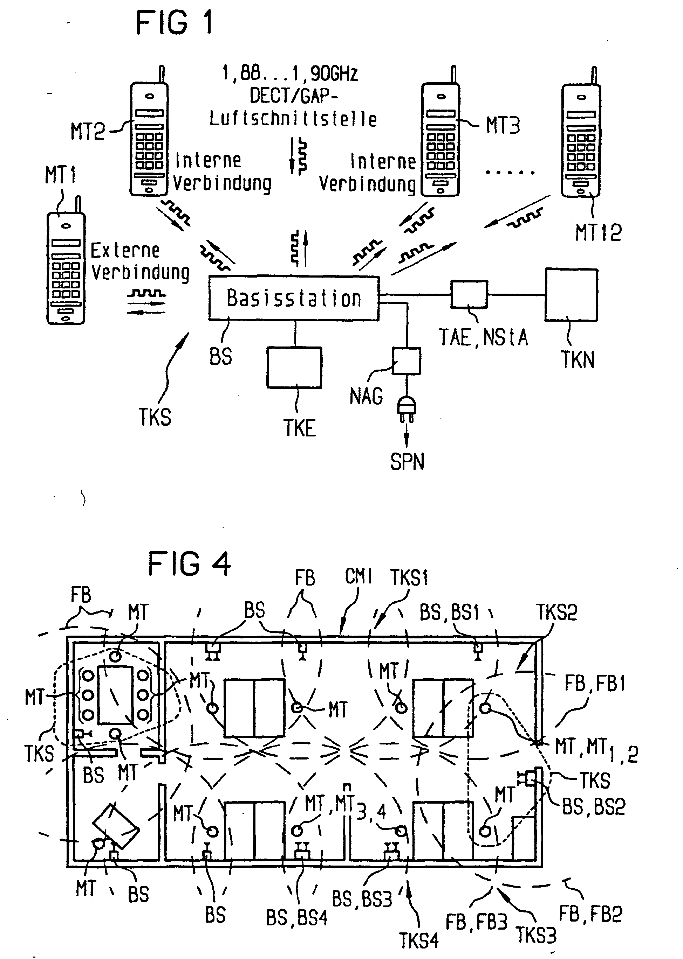

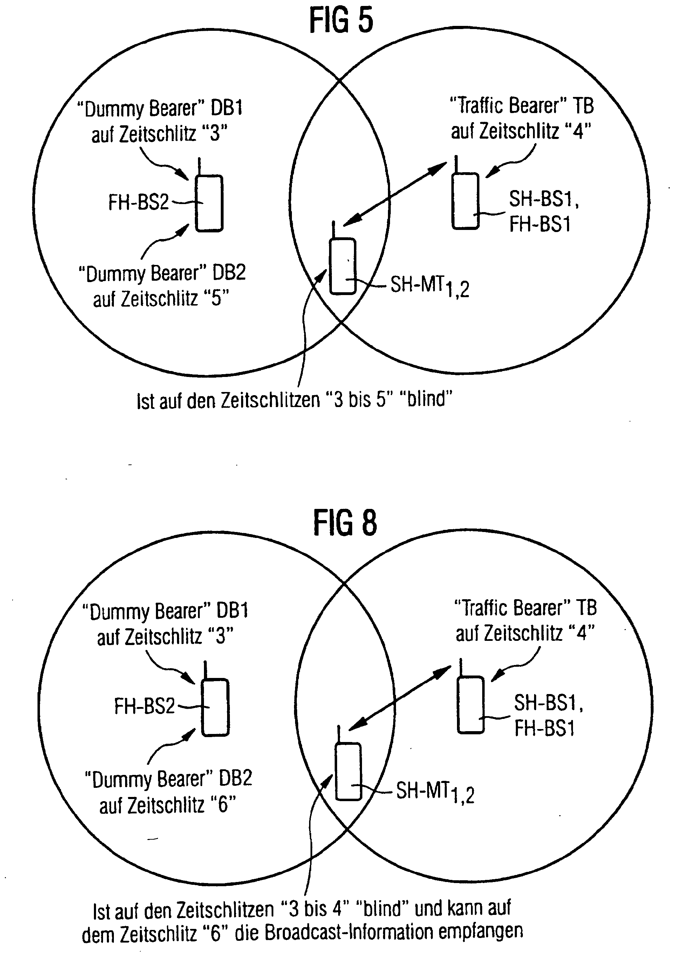

Ein zellulares Funksystem als Untermenge zum vorstehend definierten Nachrichtensystem ist beispielsweise das zellulare DECT-System [Digital Enhanced (früher: European) Cordless Telecommunication; vgl. (1): Nachrichtentechnik Elektronik 42 (1992) Jan./Feb. Nr. 1, Berlin, DE; U. Pilger "Struktur des DECT-Standards", Seiten 23 bis 29 in Verbindung mit der ETSI-Publikation ETS 300175-1...9, Okt. 1992; (2): Telcom Report 16 (1993), Nr. 1, J. H. Koch: "Digitaler Komfort für schnurlose Telekommunikation - DECT-Standard eröffnet neue Nutzungsgebiete", Seiten 26 und 27; (3): tec 2/93 - Das technische Magazin von Ascom "Wege zur universellen mobilen Telekommunikation", Seiten 35 bis 42; (4): Philips Telecommunication Review, Vol. 49, No. 3, Sept. 1991, R.J. Mulder:" DECT, a universal cordless access system"; (5): WO 93/21719 (FIG 1 bis 3 mit dazugehöriger Beschreibung)] oder das zellulare GAP-System (Generic Access Profile; ETSI-Publikation prETS 300444, April 1995, Final Draft, ETSI, FR), das beispielsweise auf der Basis eines monozellularen DECT/GAP-Systems (Single Cell System) nach FIGUR 1 gemäß der Darstellung in den FIGUREN 4 und 5 aufgebaut sein kann.

Nach dem DECT/GAP-Standard können gemäß der Darstellung in FIGUR 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (Time Division Multiple Access/Frequency Division Multiple Access/Time Division Duplex) parallel zu DECT/GAP-Mobilteilen MT1...MT12 aufgebaut werden. Die Zahl 12 ergibt sich aus einer Anzahl "k" von für den Duplex-betrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

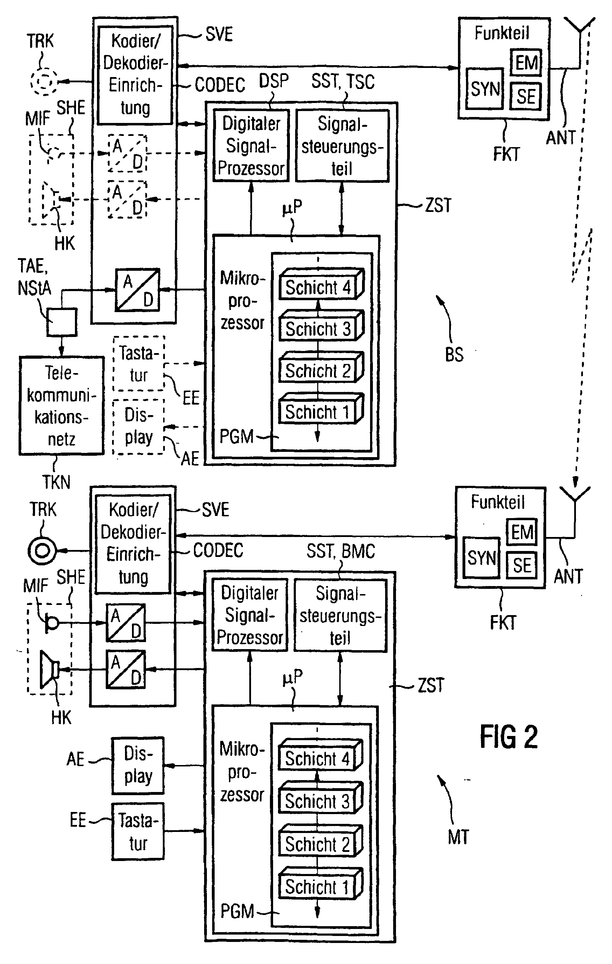

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT nach FIGUR 1. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [vgl. (1): Unterrichtsblätter - Deutsche Telekom, Jg. 48, 2/1995, Seiten 102 bis 111; (2): ETSI-Publikation ETS 300175-1...9, Oktober 1992] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

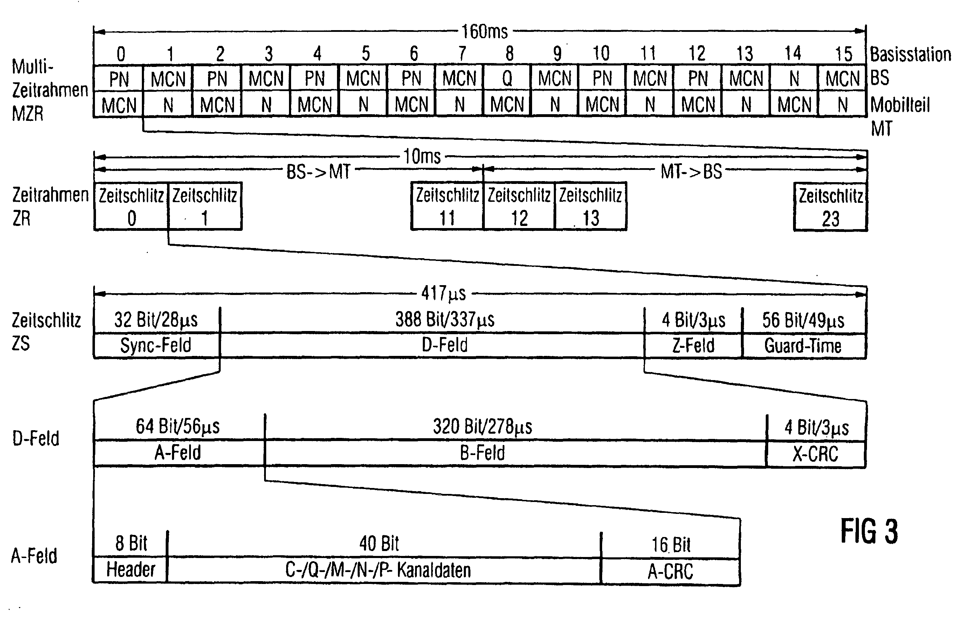

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS nach FIGUR 1. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (Time Division Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Ausgehend von der WO94/10811 (Patentansprüche 1 und 2) ist es möglich, daß die Basisstation BS und/oder das Mobilteil MS nach den FIGUREN 1 bis 3 ein Funkteil aufweist/aufweisen, das in der Lage ist entweder einen schnellen Kanalwechsel oder einen langsamen Kanalwechsel durchzuführen. Man spricht in diesen Fällen von einem "Fast Hopping"-Funkteil (FH-Funkteil) bzw. einem "Slow Hopping"-Funkteil (SH-Funkteil). Demzufolge sind die Basisstation BS entweder eine FH-Basisstation oder eine SH-Basisstation und das Mobilteil entweder ein FH-Mobilteil oder ein SH-Mobilteil.

FIGUR 4 zeigt ausgehend von dem DECT/GAP-System nach FIGUR 1 ein zellulares DECT/GAP-Multisystem CMI (Cordless Multicell Integration), bei dem mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen RS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 (Funkzelle) und eine zweite Basisstation BS2 eines zweiten Telekommunikationssystems TKS2 in einem zweiten Funkbereich FB2 (Funkzelle) angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 (Funkzelle) angeordnet sind - und Telekommunikationsverbindungen zu mindestens einem Möbilteil MT_{3,4} aufbauen können.

Für den Aufbau von Telekommunikationsverbindungen zwischen der/den Basisstation/en BS und den Mobilteilen MT in den DECT/GAP-Systemen gemäß den FIGUREN 1 bis 4 sendet die Basisstation BS (Radio Fixed Part RFP) über die DECT-Luftschnittstelle in regelmäßigen Zeitabständen auf Simplex-Übertragungswegen, den sogenannten "Dummy-Bearer" (erster Informationsträger), Broadcast-Informationen, die von dem Mobilteil MT (Radio Portable Part RPP) gemäß den FIGUREN 1 bis 4 empfangen werden und diesem für die Synchronisation und den Verbindungsaufbau mit der Basisstation dienen. Die Broadcast-Informationen müssen nicht unbedingt über den "Dummy Bearer" gesendet werden.

Es ist auch möglich, daß kein "Dummy Bearer" benötigt wird, weil die Basisstation bereits mindestens eine Telekommunikationsverbindung, den sogenannten "Traffic Bearer" (zweiter Informationsträger), zu einem anderen Mobilteil unterhält und auf dem es dann die nötigen Broadcast-Informationen sendet. In diesem Fall kann das Mobilteil, das eine Telekommunikationsverbindung zu der Basisstation haben möchte, die Broadcast-Informationen - wie beim Übertragen der Broadcast-Informationen über den "Dummy Bearer" - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

In den Systeminformationen sind darüber hinaus Zusatzinformationen enthalten, die das Mobilteil darüber informieren, welche TDMA-Zeitschlitze an der Basisstation verfügbar sind. Diese Zusatzinformation wird im DECT-Standard (ETSI-Publikation ETS 300175-3, Oktober 1992, Kapitel 11.4.1, Note 4) und dem GAP-Standard, der eine Untermenge des DECT-Standards ist und dem die Aufgabe zukommt, die Interoperabilität der DECT-Luftschnittstelle für Telefonanwendungen sicherzustellen (vgl. ETSI-Publikation prETS 300444, April 1995, Kapitel 10.3.3) als "Blind Slot"-Information oder "Poor Channel"-Information bezeichnet. Das Senden der Zusatzinformation beruht auf den in TDMA/FDMA-Funksystemen, wie das DECT-System, auftretenden "Blind Slot-Effekt". Der "Blind Slot-Effekt" tritt insbesondere dann auf, wenn
a) Basisstationen gemäß FIGUR 2 jeweils nur ein Funkteil mit einem Sender und Empfänger aufweisen und somit während eines Zeitschlitzes nur auf einer Frequenz senden oder empfangen können; unterhält die Basisstation eine Duplex-Funkverbindung in einem bestimmten Zeitschlitzpaar, so kann sie auf diesem Zeitschlitzpaar keine weiteren Funkverbindungen zu anderen Mobilteilen aufbauen;
b) Basisstationen gemäß der WO 94/10811 durch technische Ristriktionen (z.B. DECT-Basisstationen mit einem "Slow. Hopping"-Funkteil) in bestimmten Zeitschlitzen nicht senden oder empfangen können.

Der Fall b) bleibt im folgenden außer.Acht, weil die vorliegende Erfindung von Basisstationen mit schneller Kanalwechselfunktion (FH-Basisstationen) ausgeht.

Der Verbindungsaufbau erfolgt nach den Regeln der Kanalselektion (vgl. ETSI-Publikation ETS 300175-3, Oktober 1992, Kapitel 11.4), wonach ein neuer Kanal für den Aufbau einer neuen Verbindung selektiert und eine Verbindungsanforderung (SETUP-Anforderung) abgesetzt wird. Die Kanalselektion erfolgt dabei im wesentlichen in der Zentralen Steuerung ZST des Mobilteils MT bzw. der Basisstation BS nach FIGUR 2.

Der vorstehend im Zusammenhang mit der Basisstation BS erläuterte "Blind Slot-Effekt" tritt natürlich auch bei dem Mobilteil MT auf; so insbesondere dann, wenn
a) Mobilteile gemäß FIGUR 2 jeweils nur ein Funkteil mit einem Sender und Empfänger aufweisen und somit während eines Zeitschlitzes nur auf einer Frequenz senden oder empfangen können; unterhält das Mobilteil eine Duplex-Funkverbindung zu einer Basisstation in einem bestimmten Zeitschlitzpaar, so kann sie auf diesem Zeitschlitzpaar keine weiteren Funkverbindungen zu einer anderen Basisstation aufbauen;
b) Mobilteile gemäß der WO 94/10811 durch technische Ristriktionen (z.B. DECT-Mobilteile mit einem "Slow Hopping"-Funkteil) in bestimmten Zeitschlitzen nicht senden oder empfangen können.

Ausgehend von den vorstehenden Ausführungen und der Tatsache, daß zum einen "Fast Hopping"-Funkteile gegenüber "Slow Hopping"-Funkteile wesentlich entwicklungsaufwendiger und somit teurer sind und man zum anderen daran interessiert ist, die Mobilteile möglichst kostengünstig herzustellen, ergibt sich ein Szenario, bei dem in dem zellularen DECT/GAP-System gemäß der FIGUR 4 Basisstationen mit schneller Kanalwechselfunktion (FH-Basisstationen) und Mobilteile mit langsamer Kanalwechselfunktion (SH-Mobilteile) enthalten sind.

In einem derartigen System gibt es demzufolge - gemäß FIGUR 5 - beispielsweise ein SH-Mobilteil (Mobilteil mit langsamer Kanalwechselfunktion) SH-MT_{1.2}, das gleichzeitig mit zwei Basisstationen - einer SH-Basisstation (Basisstation mit langsamer Kanalwechselfunktion) SH-BS1 und einer FH-Basisstation (Basisstation mit schneller Kanalwechselfunktion) FH-BS2 oder zwei FH-Basisstationen (Basisstationen mit schneller Kanalwechselfunktion) FH-BS1, FH-BS2 - durch Telekommunikation verbindbar ist. Während das SH-Mobilteil SH-MT_{1,2} mit einer ersten SH/FH-Basisstation SH-BS1, FH-BS1 durch Telekommunikation verbunden ist, könnte das SH-Mobilteil SH-MT_{1,2} - weil es sich im Überlappungsbereich der Funkbereiche FB1, FB2 befindet - gleichzeitig zunächst durch Aufsynchronisation eine Telekommunikationsverbindung in spe zu einer zweiten FH-Basisstation FH-BS2 aufbauen (Stichwort: Roaming, Handover). Diese Aufsynchronisation wird durch das Senden der vorstehend erwähnten Broadcast-Informationen von der jeweiligen Basisstation zum betreffenden Mobilteil eingeleitet. Die Broadcast-Information kann dabei - wie bereits erwähnt - über einen "Dummy Bearer" oder einen "Traffic Bearer" übertragen werden. Aus Gründen der spektralen Effizienz in DECT/GAP-Systemen sollen für die Übertragung der Broadcast-Informationen z.B. nicht mehr als zwei TDMA-Zeitschlitze (Sendezeitschlitze der jeweilgen Basisstation) verwendet werden. Hieraus ergibt sich folgendes Problem:

Sendet die zweite FH-Basisstation FH-BS2 z.B. die Broadcast-Informationen über "Dummy Bearer" in den Zeitschlitzen "3" und "5" (z.B. erster "Dummy Bearer" DB1 auf Zeitschlitz "3" und zweiter "Dummy Bearer" DB2 auf Zeitschlitz "5") zum SH-Mobilteil SH-MT_{1,2} und unterhält dieses SH-Mobilteil SH-MT_{1,2} gleichzeitig über einen "Traffic Bearer" TB auf dem Zeitschlitz "4" eine Telekommunikationsverbindung zur ersten SH/FH-Basisstation SH-BS1, FH-BS1, so kann das SH-Mobilteil SH-MT_{1,2} - dadurch, daß es wegen des SH-Funkteils bei einem Frequenzwechsel nicht von einem aktiven Zeitschlitz zu benachbarten Zeitschlitzen wechseln kann - die von der zweiten FH-Basisstation FH-BS2 gesendeten Broadcast-Informationen nicht empfangen ("Blind Slot"-Effekt).

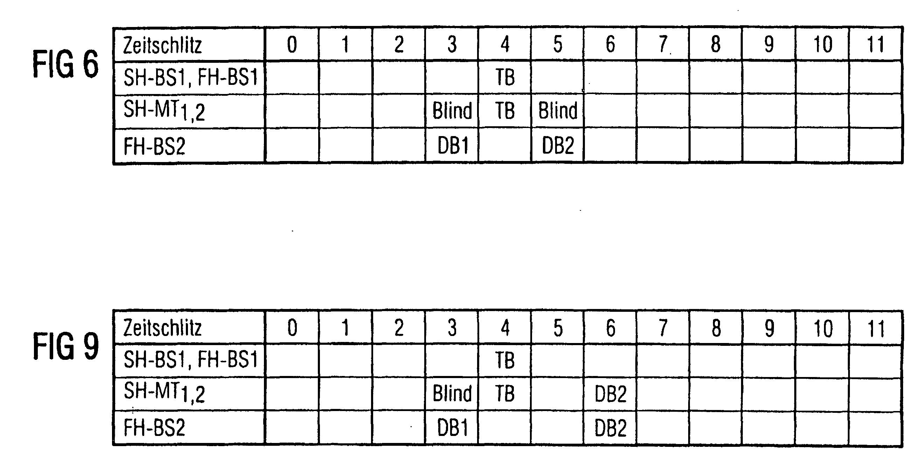

FIGUR 6 zeigt anhand einer Zeitschlitzbelegungstabelle, daß das SH-Mobilteil SH-MT_{1,2} für Signale der zweiten FH-Basisstation FH-BS2, die diese in den Zeitschlitzen "3" bis "5" sendet, "blind" ist. Auf dem Zeitschlitz "4" kann das SH-Mobilteil SH-MT_{1,2} wegen des "Traffic Bearer" TB nichts empfangen und auf den Zeitschlitzen "3" und "5" kann das SH-Mobilteil SH-MT_{1,2} wegen des SH-Funkteils die "Dummy Bearer" DB1, DB2 nicht empfangen.

Die der Erfindung zugrundeliegende Aufgabe besteht darin, daß ein Mobilteil mit langsamer Kanalwechselfunktion sich gleichzeitig auf mindestens zwei Basisstationen - z. B. auf zwei Basisstationen mit schneller Kanalwechselfunktion - eines zellularen TDMA/FDMA-Funksystems, insbesondere eines zellularen DECT/GAP-Systems, frequenzökonomisch aufsynchronisieren kann.

Diese Aufgabe wird durch die im Patentanspruch 1 angegebenen Merkmale gelöst.

Die der Erfindung zugrundeliegende Idee besteht darin, daß eine Basisstation mit schneller Kanalwechselfunktion eines zellularen TDMA/FDMA-Funksystems, insbesondere eines zellularen DECT/GAP-Systems, Broadcast-Informationen an ein Mobilteil mit langsamer Kanalwechselfunktion des Funksystems, das bereits eine Telekommunikatonsverbindung zu einer anderen Basissstation des Funksystems unterhält, in einem in TDMA-Zeitschlitzen bemessenen, vorgegebenen Sendeabstand überträgt, der größer ist als ein durch die langsame Kanalwechselfunktion des Mobilteils vorgegebener, in TDMA-Zeitschlitzen bemessener Empfangsabstand.

Der Sendeabstand wird dabei vorzugsweise durch ein Programmmodul in der Zentralen Steuerung der Basisstation ermittelt.

Weitere vorteilhaften Weiterbildungen der Erfindung sind in den Unteransprüchen angegeben.

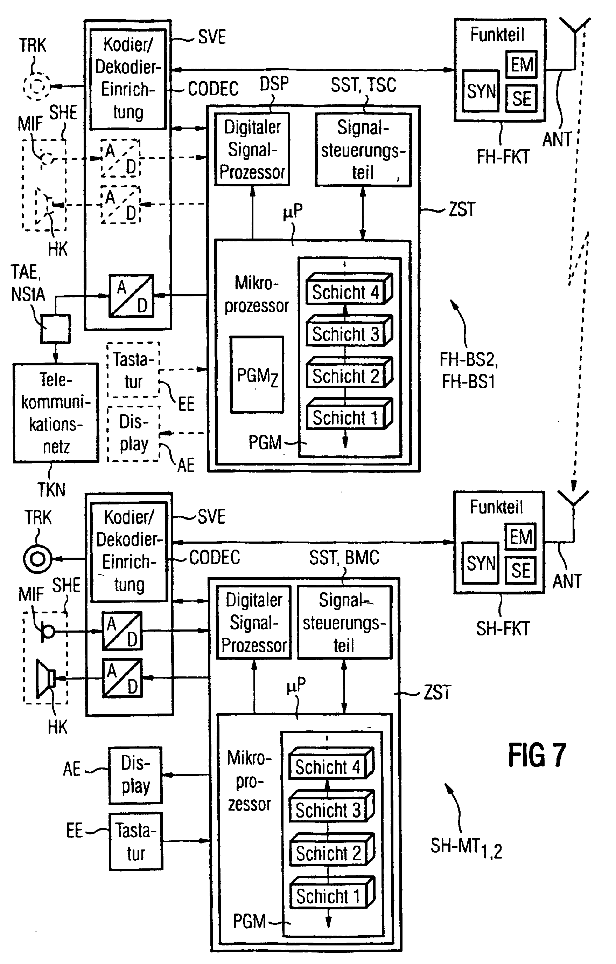

Ein Ausführungsbeispiel der Erfindung wird anhand der FIGUREN 7 bis 9 erläutert.

FIGUR 7 zeigt ausgehend von den FIGUREN 2 und 5 den prinzipiellen Schaltungsaufbau der zweiten FH-Basisstation (Basisstation mit schneller Kanalwechselfunktion) FH-BS2 und des SH-Mobilteils (Mobilteil mit langsamer Kanalwechselfunktion) SH-MT_{1,2.} Dieser Schaltungsaufbau und die nachfolgenden Ausführungen gelten auch für die ggf. (vgl. Beschreibung zur Figur 5) als FH-Basisstation ausgebildete erste FH-Basisstation FH-BS1. Bei dem SH-Mobilteil SH-MT_{1,2} ist das in der FIGUR 2 dargestellte Funkteil FKT als SH-Funkteil SH-FKT ausgebildet, das bei einem Frequenzwechsel nicht von einem aktiven Zeitschlitz zu benachbarten Zeitschlitzen wechseln kann. Das SH-Funkteil SH-FKT kann stattdessen erst auf den jeweils übernächsten Zeitschlitz wechseln. Der Empfangsabstand des SH-Funkteils SH-FKT beträgt somit eine erste Anzahl (n) von Zeitschlitzen mit "n ≥ 2". Im vorliegenden Ausführungsbeispiel ist "n = 2".

Bei der zweiten FH-Basisstation FH-BS2 ist das in der FIGUR 2 dargestellte Funkteil FKT als FH-Funkteil FH-FKT ausgebildet, das bei einem Frequenzwechsel von einem aktiven Zeitschlitz zu benachbarten Zeitschlitzen wechseln kann. Außerdem weist die Zentrale Steuerung ZST der zweiten FH-Basisstation FH-BS2 ein zusätzliches Programmmodul PGM_{z} auf, das derart ausgebildet ist, daß unter Berücksichtigung der spektralen Effizienz in einem DECT/GAP-System das SH-Mobilteil SH-MT_{1,2} die von der FH-Basisstation FH-BS2 gemäß FIGUR 5 gesendete Broadcast-Information auf jeden Fall empfangen kann.

### Fall I:

Sendet die zweite Basisstation FH-BS2 - wie in den FIGUREN 5 und 6 dargestellt - im Rahmen der Kanalselektion die Broadcast-Informationen über die zwei "Dunmy Bearer" DB1, DB2 - wobei der erste "Dummy Bearer" DB1 z.B. - wie in den FIGUREN 5 und 6 dargestellt - im Zeitschlitz "3" plaziert wird, so sorgt das Programmmodul PGM_{z} dafür, daß der zweite "Dummy Bearer" DB2 auf einen Zeitschlitz plaziert wird, der um eine zweite Anzahl (m) von Zeitschlitzen mit "m > n" zum Zeitschlitz "3" für den ersten "Dummy Bearer" DB1 versetzt ist. Im vorliegenden Ausführungsbeispiel ist "m = ±3"(vgl. FIGUREN 8 und 9) .

### Fall II:

Sendet die zweite Basisstation FH-BS2 im Rahmen der Kanalselektion die Broadcast-Informationen über einen "Dummy Bearer", z.B. den ersten "Dummy Bearer" DB1, der z.B. - wie in den FIGUREN 5 und 6 dargestellt - im Zeitschlitz "3" plaziert wird und soll zusätzlich ein weiterer Zeitschlitz für einen "Traffic Bearer" TB aktiviert werden, so sorgt das Programmmodul PGM_{z} - falls möglich - dafür, daß der "Traffic Bearer" auf einen Zeitschlitz plaziert wird, der um die zweite Anzahl (m) von Zeitschlitzen mit "m > n" zum Zeitschlitz "3" für den ersten "Dummy Bearer" DB1 versetzt ist. Im vorliegenden Ausführungsbeispiel ist "m = ±3"(vgl. FIGUREN 8 und 9).

Kann der "Traffic Bearer" auf einen solchen Zeitschlitz plaziert werden, dann kann der Zeitschlitz "3" für den ersten "Dummy Bearer" DB1 aufgelöst (deaktiviert) werden. Anderenfalls muß der erste "Dummy Bearer" DB1 auf einen für das Übertragen der Broadcast-Informationen passenden Zeitschlitz verlegt werden.

### Fall III:

Werden die Broadcast-Informationen von der zweiten Basisstation FH-BS2 im Rahmen der Kanalselektion über keinen "Dummy Bearer" gesendet und soll ein Zeitschlitz für einen neuen "Traffic Bearer" aktiviert werden, so sorgt das Programmmodul pGM_{z} - falls möglich - dafür, daß der neue "Traffic Bearer" auf einen Zeitschlitz plaziert wird, der um die zweite Anzahl (m) von Zeitschlitzen mit "m > n" zu einem Zeitschlitz für einen bereits bestehenden (alten) "Traffic Bearer" versetzt ist. Im vorliegenden Ausführungsbeispiel ist "m = ±3"(vgl. FIGUREN 8 und 9).

Kann der neue "Traffic Bearer" auf einen solchen Zeitschlitz plaziert werden, dann werden die Broadcast-Informationen in diesem Zeitschlitz übertragen. Anderenfalls muß ein "Dummy Bearer" auf einen für das Übertragen der Broadcast-Informationen passenden Zeitschlitz verlegt werden.

FIGUREN 8 und 9 zeigen ausgehend von den FIGUREN 5 und 6 die Verhältnisse im Zusammenhang mit der Übertragung von Broadcast-Informationen für die mit der Beschreibung der FIGUR 7 erläuterten Fälle.

## Patentansprüche

1. Basisstation mit schneller Kanalwechselfunktion eines zellularen TDMA/FDMA-Funksystems, insbesondere eines zellularen DECT/GAP-Systems,
(a) wobei in Funkzellen (FB1, FB2, FB3, FB4) des zellularen TDMA/FDMA-Funksystems (CMI) mindestens eine Basisstation (FH-BS2) mit schneller Kanalwechselfunktion angeordnet ist,
(b) die ein auf jede Frequenz des TDMA/FDMA-Funksystems (CMI) schaltbares erstes Funkmodul (FH-FKT) aufweist,
(c) die mit einem Mobilteil (SH-MT_{1,2}) mit langsamer Kanalwechselfunktion des TDMA/FDMA-Funksystems (CMI) durch Telekommunikation verbindbar ist,
(d) die Informationsträger (DB1, DB2, TB) aussendet, wobei das Mobilteil (SH-MT_{1,2}) zum Empfangen der Informationsträger (DB1, DB2, TB) ein zweites Funkmodul (SH-FKT) aufweist, das einen durch eine erste Anzahl n von TDMA-Zeitschlitzen bemessenen Empfangsabstand mit n ≥ 2 enthält,
**dadurch gekennzeichnet, daß**
(e) Mittel (PGM₂) zur Bildung eines Informationsträgerpaares, bestehend aus einem ersten Informationsträger (DB1, DB2) und einem zweiten Informationsträger (TB), vorgesehen sind, die derart ausgebildet sind, daß ein durch eine zweite Anzahl m von TDMA-Zeitschlitzen bemessener Sendeabstand zwischen den beiden Informationsträgern des Informationsträgerpaares größer als der Empfangsabstand des zweiten Funkmoduls (SH-FKT) ist,
(f) die Mittel (PGM_{z}) mit dem ersten Funkmodul (FH-BS2) zur Informationsträgerpaarübertragung verbunden sind.

2. Basisstation nach Anspruch 1, **dadurch gekennzeichnet, daß**
der Sendeabstand zwischen den beiden Informationsträgern des Informationsträgerpaares drei TDMA-Zeitschlitze und der Empfangsabstand zwischen den beiden Informationsträgern des Informationsträgerpaares zwei TDMA-Zeitschlitze bemißt.

3. Basisstation nach Anspruch 1 oder 2, **dadurch gekennzeichnet, daß**
das mit der Basisstation (FH-BS2) durch Telekommunikation verbindbare Mobilteil (SH-MT_{1.2}) sich in einem Überschneidungs- bzw. Überlappungsbereich der Funkzellen befindet.

4. Basisstation nach einem der Ansprüche 1 bis 3, **dadurch gekennzeichnet , daß**
der erste Informationsträger ein "Dummy Bearer" ist.

5. Basisstation nach einem der Ansprüche 1 bis 4, **dadurch gekennzeichnet, daß**
der zweite Informationsträger ein "Traffic Bearer" ist.

6. Basisstation nach einem der Ansprüche 1 bis 5, **gekennzeichnet durch** eine DECT-spezifische Basisstation eines DECT-Systems, die mit einem DECT-spezifischen Mobilteil durch Telekommunikation verbindbar ist.

## Claims

1. Base station with rapid handover function of a cellular TDMA/FDMA radio system, especially a cellular DECT/GAP system,
(a) with at least one base station (FH-BS2) with fast a fast hopping function being arranged in radio cells (FB1, FB2, FB3, FB4) of the cellular TDMA/FDMA radio system (CMI),
(b) which features a first radio module (FH-FKT) which can be switched to any frequency of the TDMA/FDMA radio system (CMI),
(c) which can be connected to a mobile unit (SH-MT_{1,2}) with a slow hopping function of the TDMA/FDMA radio system (CMI) through telecommunications,
(d) which sends out information bearers (DB1, DB2, TB), with the mobile unit (SH-MT_{1,2})featuring a second radio module (SH-FKT) for receiving the information bearers (DB1, DB2, TB) which contains a receive spacing measured by a first number n of TDMA time slots, with n ≥ 2,
**characterized in**that,
(e) means (PGM_{z}) for forming an information bearer pair, consisting of a first information bearer (DB1, DB2) and a second information bearer (TB), are provided, which are embodied such that a transmission interval measured by a second number m of TDMA time slots between the two information bearers of the information bearer pair is greater than the receive interval of the second radio module (SH-FKT),
(f) the means (PGM_{z}) are connected to the first radio module (FH-BS2) for information pair transmission.

2. Base station in accordance with claim 1, **characterized in that**,
The transmit spacing between the two information bearers of the information bearer pair extends over three TDMA time slots and the receive spacing between the two information bearers of the information bearer pair over two TDMA time slots.

3. Base station in accordance with claim 1 or 2,
**characterized in that**,
the mobile unit (SH-MT_{1,2}) which can be connected to the base station (FH-BS2) by telecommunications is located in the intersection or overlapping area of the radio cells.

4. Base station in accordance with one of the claims 1 to 3,
**characterized in that**,
the first Information bearer is a dummy bearer.

5. Base station in accordance with one of the claims 1 to 4,
**characterized in that**,
the second information bearer is a traffic bearer.

6. Base station in accordance with one of the claims 1 to 5,
**characterized by** a DECT-specific base station of a DECT system, which can be connected to a DECT-specific mobile unit through telecommunications.

## Revendications

1. Station de base avec une fonction de changement de canal rapide d'un système radio TDMA/FDMA cellulaire, en particulier d'un système DECT/GAP cellulaire,
(a) au moins une station de base (FH-BS2) avec une fonction de changement de canal rapide étant disposée dans des cellules radio (FB1, FB2, FB3, FB4) du système radio TDMA/FDMA cellulaire (CMI),
(b) laquelle comporte un premier module radio (FH-FKT) commutable sur chaque fréquence du système radio TDMA/FDMA (CMI),
(c) laquelle peut être connectée à une station mobile (SH-MT_{1, 2}) avec une fonction de changement de canal lent du système radio TDMA/FDMA (CMI) par télécommunication,
(d) laquelle émet des supports d'informations (DB1, DB2, TB), la station mobile (SH-MT₁, ₂) comportant, pour la réception des supports d'informations (DB1, DB2, TB), un deuxième module radio (SH-FKT) qui contient un écart de réception dimensionné par un premier nombre n de créneaux temporels TDMA, avec n ≥ 2,
**caractérisé en ce que**
(e) sont prévus des moyens (PGM_{z}) pour former une paire de supports d'informations, composée d'un premier support d'informations (DB1, DB2) et d'un deuxième support d'informations (TB), lesquels sont réalisés de manière telle qu'un écart d'émission entre les deux supports d'informations de la paire de supports d'informations, dimensionné par un deuxième nombre m de créneaux temporels TDMA, est supérieur à l'écart de réception du deuxième module radio (SH-FKT),
(f) les moyens (PGM_{z}) sont connectés au premier module radio (FH-BS2) pour la transmission de paires de supports d'informations.

2. Station de base selon la revendication 1, **caractérisée en ce que**
l'écart d'émission entre les deux supports d'informations de la paire de supports d'informations dimensionne trois créneaux temporels TDMA et l'écart de réception entre les deux supports d'informations de la paire de supports d'informations, deux créneaux temporels TDMA.

3. Station de base selon la revendication 1 ou 2,
**caractérisée en ce que**
la station mobile (SH-MT_{1, 2}) pouvant être connectée à la station de base (FH-BS2) par télécommunication se trouve dans une zone de recoupement resp. de chevauchement des cellules radio.

4. Station de base selon l'une des revendications 1 à 3,
**caractérisée en ce que**
le premier support d'informations est un «dummy bearer».

5. Station de base selon l'une des revendications 1 à 4,
**caractérisée en ce que**
le deuxième support d'informations est un «traffic bearer».

6. Station de base selon l'une des revendications 1 à 5, **caractérisée par** une station de base spécifique au DECT d'un système DECT, laquelle peut être connectée à une station mobile spécifique au DECT par télécommunication.
